# EUROPÄISCHE PATENTSCHRIFT

(11) **EP 4 225 010 B1**
(45) Veröffentlichungstag und Bekanntmachung des Hinweises auf die Patenterteilung: **04.12.2024**
(21) Anmeldenummer: 21798947.4
(22) Anmeldetag: 11.10.2021
(51) Int. Cl.: A01D 17/06, A01D 33/08, A23N 12/02

(54) **HACKFRUCHTFÖRDERVORRICHTUNG**
ROOT CROPS CONVEYOR
CONVOYEUR POUR PLANTES SARCLÉES

(30) Priorität: 09.10.2020 DE 102020126560
(43) Veröffentlichungstag der Anmeldung: 16.08.2023
(73) Patentinhaber: Grimme Landmaschinenfabrik GmbH & Co. KG, 49401 Damme (DE)
(72) Erfinder: MÜLLER, Fokke, 49356 Diepholz (DE)
(74) Vertreter: Wischmeyer, André
(86) Internationale Anmeldenummer: PCT/EP2021/078037
(87) Internationale Veröffentlichungsnummer: WO 2022/074256

(56) Entgegenhaltungen:
- EP-A1- 1 287 730
- EP-B1- 3 085 644
- DE-A1- 10 142 436
- US-A- 5 697 451

## Beschreibung

Die vorliegende Erfindung betrifft einen Gegenstand nach dem Oberbegriff des Anspruchs 1.

Eine gattungsgemäße Hackfruchtfördervorrichtung ist aus der DE 101 42 436 A1 bekannt. Hackfruchtfördervorrichtungen sind auch aus der US 5,697,451 sowie der EP 0 678 234 A1 bekannt.

Es ist Aufgabe der vorliegenden Erfindung, eine gattungsgemäße Hackfruchtfördervorrichtung hinsichtlich der Trennleistung zu verbessern.

Die Aufgabe wird gelöst durch einen Gegenstand gemäß Anspruch 1 sowie durch einen Gegenstand nach Anspruch 11, vorteilhafte Ausgestaltungen der Erfindung sind den Unteransprüchen sowie der nachfolgenden Beschreibung zu entnehmen.

Bei einer erfindungsgemäßen Hackfruchtfördervorrichtung ist die Stellvorrichtung zur Verschwenkung der Walzengruppenebene insbesondere gegenüber einer Drehachse einer Walze einer benachbarten Walzengruppe ausgebildet. Hierdurch können verschiedene Steigungen entlang der Förderstrecke und eine Kaskadierung derselben realisiert werden, was die Trennleistung variierbarer werden lässt. Beispielsweise handelt es sich um eine ansteigende Förderstrecke einer ersten Walzengruppe, die über eine Übergabestufe und einem hiermit einhergehenden Fallen der Hackfrüchte auf einen erneut ansteigenden Förderstreckenabschnitt einer weiteren Walzengruppe übergeht. Alternativ oder ergänzend kann eine abfallende Förderstrecke einer ersten oder weiteren Walzengruppe in eine Steigung einer nachfolgenden Walzengruppe übergehen. Beide gegebenenfalls sich ergänzende Varianten sind geeignet, eine intensive und gleichzeitig schonende Reinigung zu bewirken.

Verschwenkung bedeutet vorliegend, dass eine von der Walzengruppenebene aus die Drehachse der benachbarten Walzengruppe schneidende senkrechte im Vergleich zu vor und nach der Verschwenkung ebenfalls verschwenkt ist. Alternativ oder ergänzend handelt es sich um eine Verschwenkung zu einem Untergrund, d.h. die Walzengruppenebene steht nach der Verschwenkung in einem anderen Winkel zum horizontalen Untergrund als vor der Verschwenkung.

Weiterhin zeichnet sich eine erfindungsgemäße Hackfruchtfördervorrichtung dadurch aus, dass die Walzen zumindest einer Walzengruppe über einen Scherenmechanismus miteinander verbunden sind. Hierdurch wird eine einfache und insbesondere mittels eines einzigen Stellmittels variierbare Abstandsänderung der Drehachsen einer Walzengruppe ermöglicht. Insbesondere kann mittels zumindest zweier Stellmittel eine Abstandsänderung der Drehachse der Walzen sämtlicher jeweiliger Walzengruppen undabhängig von der Verschwenkung der Walzengruppenebenen erfolgen. In Kombination mit einer Verschwenkbarkeit der Ebenen einer Walzengruppe ist eine optimierte Anpassbarkeit an eine Vielzahl von Hackfrüchten und Reinigungsanforderungen erreicht.

Insbesondere ist ein für die Abstandsänderung der Drehachsen einer Walzengruppe vorgesehenes Stellmittel zur Einstellung des Abstands der Drehachsen aller Walzengruppen vorgesehen. Hierzu wird die Kraft von dem Stellmittel mittels eines entlang der Walzengruppen angeordneten Lenkers auf diese Walzengruppen übertragen, wobei sich das Stellmittel vorzugsweise an zwei jeweils zwei Walzengruppen verbindenden Lenkern abstützt, wenn insbesondere drei Walzengruppen vorhanden sind. Zur Übertragung der vom Stellmittel ausgeübten Kraft und zur Führung der Lagerpunkte der Walzengruppen können hierfür weiterhin Koppelstangen mit jeweiligen Langlöchern vorhanden sein, in denen einzelne Lager eines jeweiligen Seitenteils beispielsweise eines Scherenmechanismus geführt sind.

Ein Scherenmechanismus einer jeweiligen Walzengruppe umfasst an zumindest einem seitlichen Ende der Walzen einer Walzengruppe vorhandene Seitenteile, die als Mehrgelenk, insbesondere in Parallelogrammform, miteinander verbunden sind. Einzelne der Seitenteile einer Walzengruppe sind an einem Rahmen oder einem Seitenteil einer benachbarten Walzengruppe schwenkbar abgestützt.

Typischerweise sind die Walzen auf beiden Seiten, zumindest jedoch einseitig über zwei Lager gelagert. Diese sind insbesondere endseitig der Walzen vorhanden und in Förderrichtung betrachtet links und rechts endseitig der Walzen angeordnet.

Vorzugsweise ist das Stellmittel der Stellvorrichtung zur Verschwenkung zumindest einer der Walzengruppenebenen ausgebildet, wobei die Einstellung insbesondere auch während des Betriebs der Vorrichtung durch das Stellmittel möglich ist. Als Stellmittel kommen insbesondere hydraulische und/oder elektrisch angetriebene Stellmittel in Form von Zylindern oder Motoren in Frage.

Sofern nachfolgend und vorstehend von benachbarten Walzenpaaren bzw. benachbarten Walzen oder Lagern die Rede ist, handelt es sich um eine Nachbarschaft betrachtet in Richtung quer zur Hauptförderrichtung der Hackfruchtfördervorrichtung. In beispielsweise einer Ansicht von rechts auf die Hauptförderrichtung erfolgt eine Förderung des Förderguts insbesondere in Form von Kartoffeln von einer ersten, linken Walzengruppe zu einer benachbarten, weiter rechts angeordneten Walzengruppe.

Das Stellmittel ist insbesondere zur Verschwenkung aller Walzengruppenebenen ausgebildet. Hierfür kann das Stellmittel mit zumindest einem Lenker verbunden sein, welcher direkt oder indirekt auf alle Walzengruppen einwirkt.

Vorzugsweise weist die Stelleinrichtung zumindest zwei für eine Seite der Hackfruchtfördervorrichtung vorgesehene Stellmittel auf, wobei das zur Verschwenkung vorgesehene Stellmittel unabhängig von einem weiteren Stellmittel betätigbar ist. Das weitere Stellmittel ist insbesondere in einer Variante mit einem Schweremechanismus für dessen Betätigung vorgesehen und bewirkt allgemein eine Abstandsänderung der Drehachsen innerhalb zumindest einer und bevorzugt aller Walzengruppen. Die dann zumindest zwei Stellmittel sind für eine Seite oder auch für beide Seiten der Hackfruchtfördervorrichtung links und rechts betrachtet in Hauptförderrichtung vorgesehen. Bevorzugt weisen allerdings beide Seiten jeweils zwei entsprechende Stellmittel auf.

Nachfolgend wird zur Vereinfachung oftmals, wie auch vorstehend, nur auf eine Seite der Hackfruchtfördervorrichtung Bezug genommen, da die zur Verstellung der Hackfruchtfördervorrichtung vorgesehenen Stellmittel auf beiden Seiten identisch vorhanden sein können und auch die Mittel zur Lagerung und Führung der Walzen und der Walzengruppen auf beiden Seiten, d. h. in Förderrichtung links und rechts endseitig der jeweiligen Walzen üblicherweise spiegelbildlich vorhanden sind. Antriebsmittel für die Drehung der Walzen können hingegen abwechselnd links und rechts angeordnet sein.

Durch die vorstehende Ausbildung mit zwei Stellmitteln kann beispielsweise der Abstand der Walzen einer Walzengruppe unabhängig von einer Verschwenkung der Walzengruppenebene zumindest einer Walzengruppe vorgenommen werden. Die Verschwenkung erfolgt somit unabhängig von einer weiteren Einstellung der Hackfruchtfördervorrichtung.

Insbesondere sind das erste und das zweite Stellmittel gleichwohl an einem gemeinsamen, zwei Walzengruppen verbindenden Lenker gelenkt, insbesondere wobei die Stellmittel nicht zur Festlegung am Rahmen ausgebildet sind, was einerseits den Einbau und die Nachrüstung einer entsprechenden Walzengruppe erleichtert und darüber hinaus zu einer Vereinfachung der vorhandenen Lagerkonstruktionen führt, da ein und derselbe Lenker einerseits als Lagerpunkt für das Stellmittel zur Verstellung beispielsweise des Abstandes der Drehachsen einer Walzengruppe dient und darüber hinaus mittels desselben Lenkers eine Relativbewegung zwischen zwei benachbarten Walzengruppen ausgeübt werden kann.

Eine Gesamteinstellung der Neigung der Hackfruchtfördervorrichtung kann erfindungsgemäß durch ein weiteres, drittes Stellmittel der Stellvorrichtung vorgenommen werden. Ein solches, drittes Stellmittel kann eine Verstellung gegenüber einem Rahmen bewirken, beispielsweise indem die Hackfruchtfördervorrichtung auf einer Seite durch ein längenveränderbares Stellmittel am Rahmen gehalten ist. Gleiches gilt dann entsprechend dem Vorstehenden auch für das andere Ende der Hackfruchtfördervorrichtung und eine spiegelbildliche Ausbildung der dann zwei dritten Stellmittel.

Vorzugsweise sind zwei benachbarte Walzengruppen mittels eines zumindest als Viergelenk ausgebildeten Gelenks miteinander gekoppelt. Mittels des zur Verschwenkung vorgesehenen Stellmittels ist zumindest einer der Lagerpunkte einer Walzengruppe gegenüber einem in einer Seitenansicht benachbarten Lagerpunkt höhenverstellbar, so dass durch die relative Höhenverstellung eine Verschwenkung der Walzengruppenebenen möglich ist. Die hiermit einhergehende Kaskadierung der Walzengruppen führt zu einer besser und individueller einstellbaren Fraktionier- und Reinigungsleistung.

Zur Zwangsführung der Seitenteile bezüglich einer Verschwenkung der Walzengruppenebenen und einer Abstandsänderung der Drehachsen bzw. der Walzen einer jeweiligen Walzengruppenebene sind die Seitenteile des Scherenmechanismus auf beiden Seiten der Walzen in jeweils zwei Koppelstangen mit jeweiligen Langlöchern gelagert. Die Koppelstangen sind über den Verbindungslenker relativ zueinander beweglich, so dass durch eine Betätigung des zur Verschwenkung vorgesehenen Stellmittels die Koppelstangen und die an diesen angeordneten Lager der Seitenteile mit bewegt werden.

Insbesondere sind die Langlöcher jeweils an den Enden der Koppelstangen, während zwischen den Langlöchern in einem mittleren Bereich ein ortsfestes Schwenklager vorhanden ist. Zur Betätigung des Scherenmechanismus insbesondere mittels eines als aus- und einfahrbarer Zylinder ausgebildeten Stellmittels ist es vorteilhaft, auf einer Lagerseite des Stellmittels den Verbindungslenker mit einem mittigen Lagerpunkt in einem Langloch des einen Verbindungslenkers und einem bezüglich der anderen Koppelstange ortsfesten Schwenklager der anderen Koppelstange zu lagern, während auf der anderen Lagerseite des Stellmittels der weitere Verbindungslenker mit seinem mittigen Lagerpunkt im ortsfesten Schwenklager angeordnet ist und sich an der anderen Koppelstange mit seinem weiteren Lagerpunkt im Langloch befindet. Mit dieser Anordnung geht ein Ausfahren des Stellmittels mit einer Abstandsvergrößerung der Verbindungslenker einher. Durch die Koppelung der Walzengruppen mit den Verbindungslenkern und einem jeweiligen Walzenlenker zur Ausbildung eines parallelogrammartigen Viergelenks und der gleichzeitigen Kopplung der Seitenteile einer jeweiligen Walzengruppe in Form eines Scherenmechanismus geht die Abstandsänderung der Verbindungslenker mit einer Abstandsänderung der Drehachsen einer jeweiligen Walzengruppe einher.

Insbesondere sind zwei benachbarte Walzengruppen parallelogrammartig miteinander verbunden, d. h. es gibt vier Lagerpunkte, deren Verbindungslenker in jeder Position ein Parallelogramm aufspannen. Hierdurch sind die benachbarten Walzengruppen miteinander einfach definierbar gekoppelt.

Eine Ausgestaltung einer Hackfruchtfördervorrichtung nach dem Stand der Technik ist dann gegeben, wenn alle Walzen einer Walzengruppe einseitig in nur einem Seitenteil gelagert sind. Auf der gegenüberliegenden Seite ist dann vorzugsweise ebenfalls nur ein Seitenteil zur Lagerung der Walzen der Walzengruppe vorhanden, so dass die Drehachsen einer Walzengruppe in einer festen Lagebeziehung zueinanderstehen.

Gemäß einer weiteren vorteilhaften Weiterbildung der Erfindung weist die Hackfruchtfördervorrichtung eine Exzenteraufhängung von zumindest einer Walzengruppe auf, wobei das Stellmittel in Antriebsverbindung insbesondere mit einer Scheibe steht, an der mittels eines Hängelenkers die Walzengruppe exzentrisch aufgehängt ist. Die Scheibe oder ein anderes Übertragungsmittel ist vorzugsweise zentral gelagert und weist außermittig ein Lager für zumindest einen Hängelenker der Walzengruppe auf. Dies gilt ebenfalls wieder in einer seitlichen Betrachtung für eine Seite des Walzengruppe. Auf der gegenüberliegenden Seite der Walzengruppe ist dann eine vorzugsweise spiegelbildliche Aufhängung vorhanden. Die Verbindung benachbarter Walzengruppen erfolgt mittels eines Fünfgelenks.

Die Scheiben sind insbesondere in einem Rahmen der Hackfruchtfördervorrichtung oder in einem Rahmen einer Gesamtvorrichtung, in der die Hackfruchtfördervorrichtung eingesetzt ist, gelagert. Hierdurch wird eine besonders einfache Änderung der Verschwenkung der Walzengruppenebene ermöglicht.

Vorteilhafterweise handelt es sich bei den Walzen der Hackfruchtfördervorrichtung um Spiralwalzen, deren benachbarte Wendelabschnitte in einer Draufsicht und bezüglich einer Hauptlängsachse der Walze einen Abstand von weniger als 5 cm aufweise. Vorzugsweise sind diese Spiralwalzen mit Mänteln und Wendeln aus Polyurethan versehen.

Weiterhin wird die eingangs gestellte Aufgabe durch ein landwirtschaftliches Gerät der Lagertechnik gelöst, welches eine vor- oder nachbeschriebene erfindungsgemäße Hackfruchtfördervorrichtung aufweist.

Weitere Vorteile und Einzelheiten der Erfindung sind der nachfolgenden Figurenbeschreibung zu entnehmen. Schematisch dargestellt zeigt:
- Fig. 1:: eine Seitenansicht einer nicht erfindungsgemäßen Hackfruchtfördervorrichtung in einer teilweisen Darstellung,
- Fig. 2:: den nicht erfindungsgemäßen Gegenstand nach Fig. 1 in einer neuen Betriebsposition und weiter abstrahiert,
- Fig. 3:: einen erfindungsgemäßen Gegenstand,
- Fig. 4:: den Gegenstand nach Fig. 3 in einer weiteren Position,
- Fig. 5:: den Gegenstand nach Fig. 4 in einer weiteren Position,
- Fig. 6:: eine perspektivische Darstellung des Gegenstands nach Fig. 5,
- Fig. 7:: einen weiteren erfindungsgemäßen Gegenstand in einer Seitenansicht und einer teilweisen Darstellung,

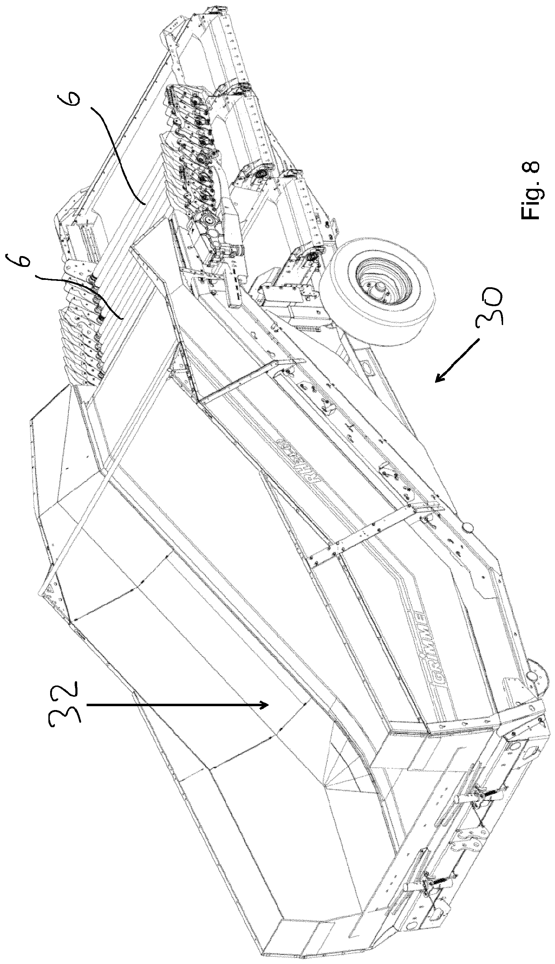

- Fig. 8: ein weiteres Ausführungsbeispiel der Erfindung.

Einzelne technische Merkmale der nachfolgend beschriebenen Ausführungsbeispiele können auch in Kombination mit den Merkmalen der unabhängigen Ansprüche zu erfindungsgemäßen Weiterbildungen führen. Sofern sinnvoll sind funktional gleichwirkende Teile mit identischen Bezugsziffern versehen.

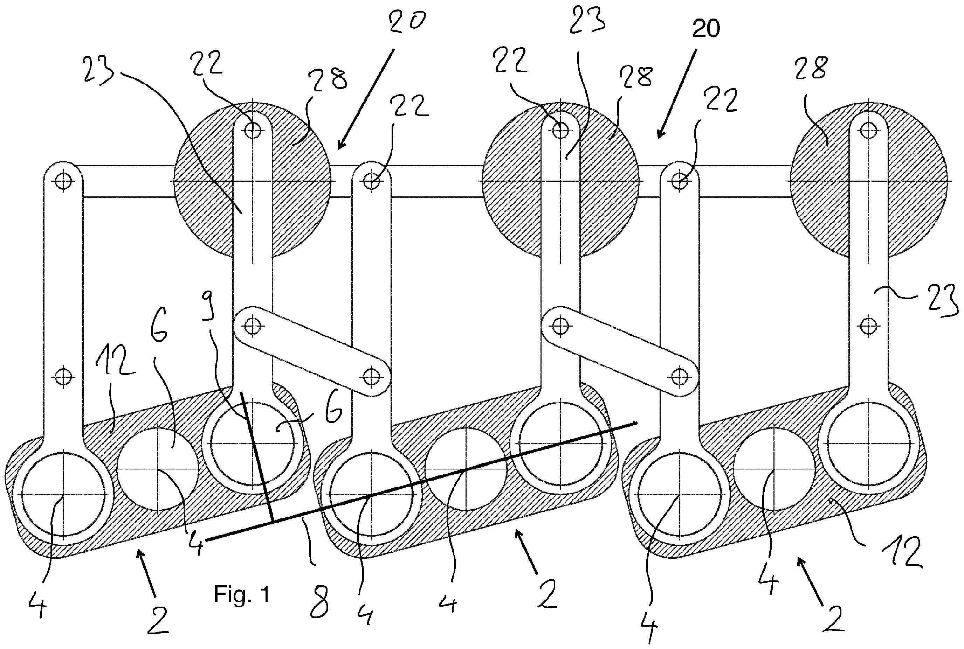

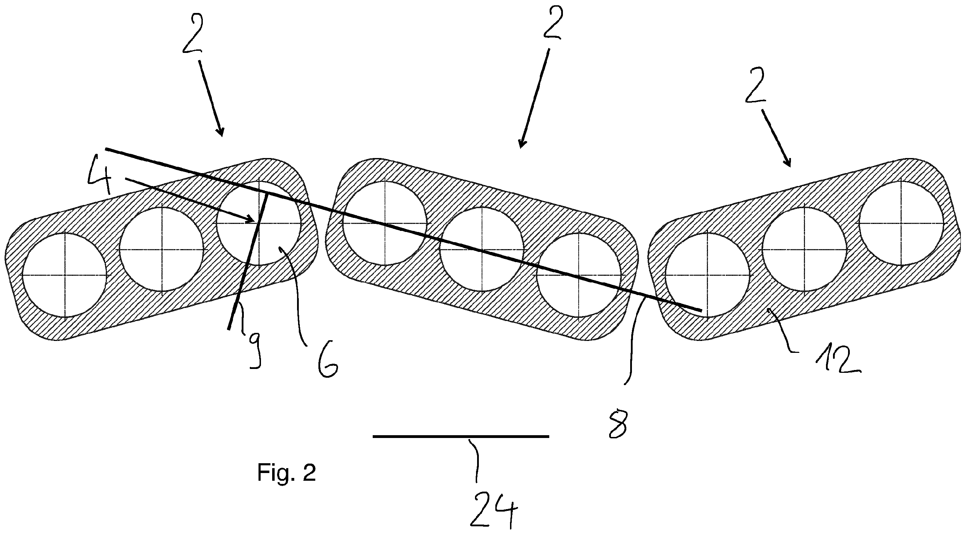

Ein erstes Ausführungsbeispiel der Erfindung (Fig. 1 und 2) umfasst drei Walzengruppen 2, deren Walzen 6 Drehachsen 4 aufweisen. Die Drehachsen 4 der jeweiligen Walzengruppe 2 spannen jeweils eine Walzengruppenebene 8 auf. Erfindungsgemäß ist es mittels eines nicht näher dargestellten Stellmittels der Stellvorrichtung über eine Betätigung einer Scheibe 28 einer jeweiligen Walzengruppe 2 eine Verschwenkung der zugehörigen Walzengruppenebene 8 vornehmbar. Diese wird über einen jeweiligen, exzentrisch an einer jeweiligen Scheibe 28 aufgehängten Hängelenker 23 vermittelt. Der Vergleich der Fig. 1 und 2 offenbart die Verschwenkung der Walzenebene 8 der mittleren Walzengruppe 2. Einerseits erfolgt eine Verschwenkung gegenüber dem Untergrund 24, insbesondere jedoch auch eine Verschwenkung zu den Walzengruppenebenen der benachbarten Walzengruppen 2. Ebenfalls ist die Verschwenkung erkennbar an einer Senkrechten 9, die auf der Walzengruppenebene 8 der mittleren Walzengruppe 2 steht und durch die Drehachse 4 einer benachbarten Welle verläuft.

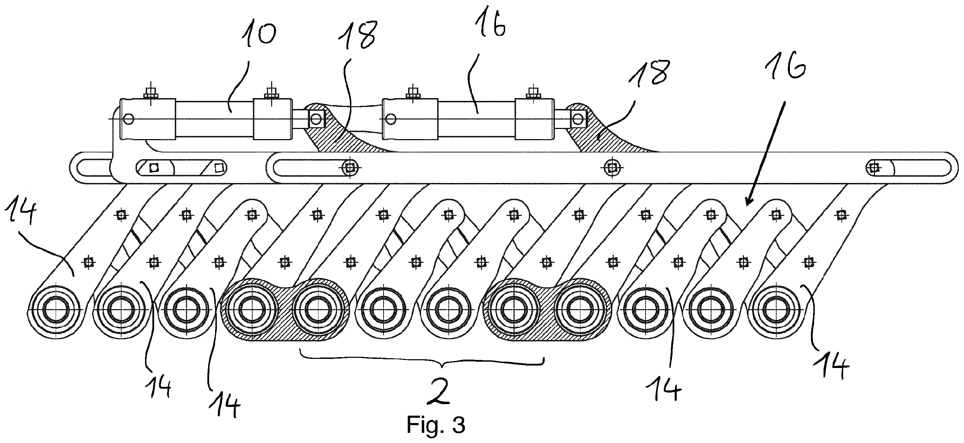

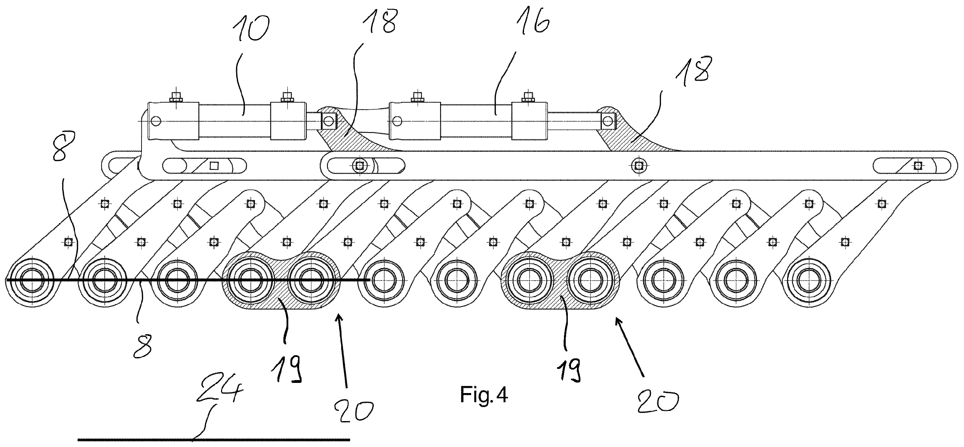

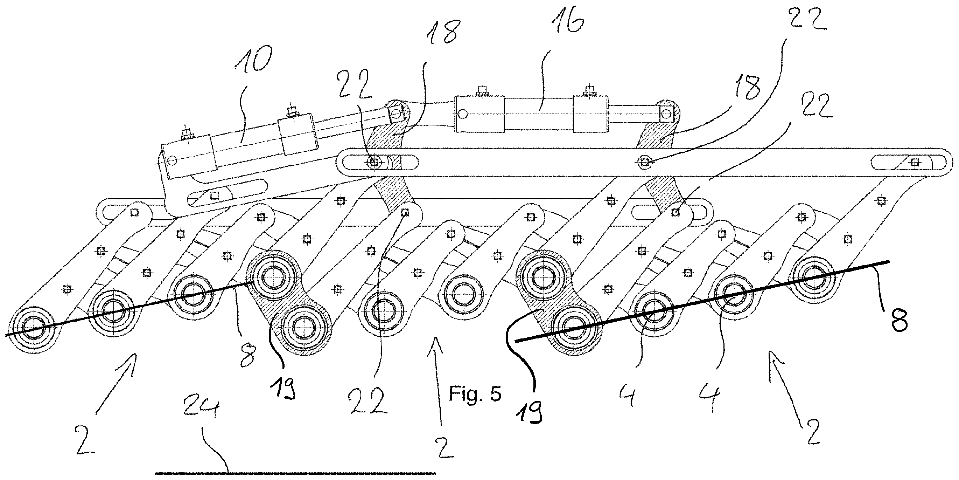

Gemäß dem weiteren Ausführungsbeispiel der Fig. 3 ist ein Stellmittel 10 zur Verschwenkung zumindest einer der Walzengruppenebenen 8 vorgesehen (vgl. Fig. 4 und 5). Hier liegt eine Verschwenkung gegenüber dem Untergrund 24 vor.

Die Hackfruchtfördervorrichtung weist vorliegend zwei Stellmittel 10, 16 auf, von denen das zur Verschwenkung vorgesehene Stellmittel 10 unabhängig von dem weiteren Stellmittel 16 betätigbar ist. Beide Stellmittel 10, 16 sind an einem gemeinsamen, zwei Walzengruppen zwei verbindenden Lenker 18 angelenkt. An dem in der Fig. 5 rechten Verbindungslenker 18 ist lediglich das zur Verstellung des Abstandes der Drehachsen 4 der jeweiligen Walzengruppen benötigtes Stellmittel 16 angeordnet.

Zur Verschwenkung der Walzengruppenebenen 8 einer jeweiligen Walzengruppe 2 erfolgt eine Verschwenkung des Verbindungslenkers 18 um die beiden oberen Lagerpunkte 22 der Fig. 5, wobei der obere linke Lagerpunkt 22 durch das Stellmittel 16, welches für die Abstandsverstellung des Scherenmechanismus bzw. der einzelnen Walzen einer Walzengruppe 2 gehalten wird.

Wie auch bei dem Ausführungsbeispiel der Fig. 1 und 2 ist hierbei jede Walzengruppe mit einer benachbarten Walzengruppe mittels eines Viergelenks, insbesondere in Form eines Parallelogramms gekoppelt und die Lagerpunkte benachbarter Walzengruppen sind mittels des über den Verbindungslenker 18 übertragenen Verstellvorgangs höhenverstellbar. Gegenstand des Viergelenks ist ebenfalls ein weiterer, benachbarte Walzengruppen verbindender Walzenlenker 19.

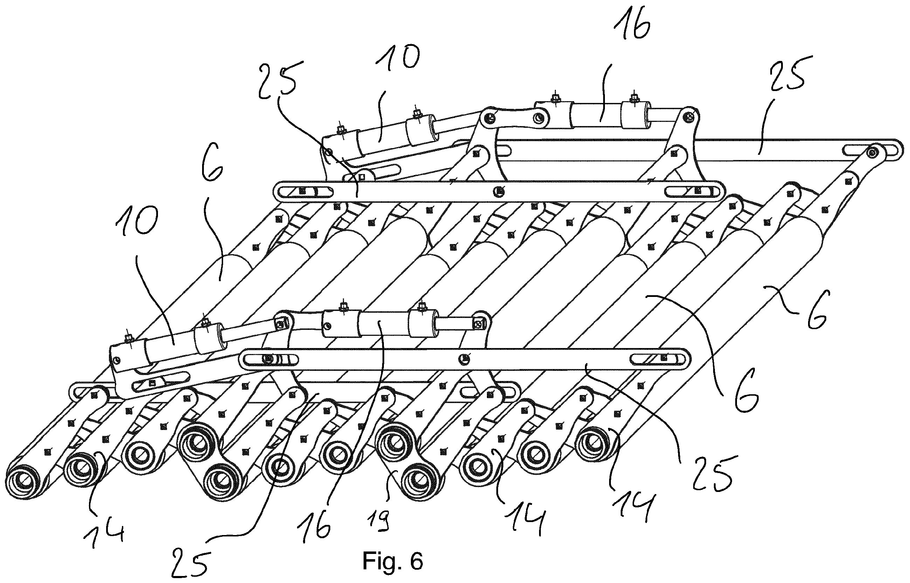

Während bei dem Ausführungsbeispiel der Fig. 1 und 2 die Walzen 6 einer Walzengruppe 2 in nur einem Seitenteil 12 gelagert sind, sind die Walzen 6 einer Walzengruppe 2 des Ausführungsbeispiels nach den Fig. 3 bis 6 in Seitenteilen 14 einer scherenartigen Verbindung bzw. eines Scherenmechanismus gelagert. Koppelstangen 25 mit jeweiligen Langlöchern dienen der Führung der Seitenteile 14 des Scherenmechanismus und dem zwangsgeführten Verstellen der Walzengruppen 2 mittels der Stellmittel 10 und 16. Sie dienen zur Abstützung der jeweiligen Schwenk- bzw. Drehbewegungen und Abstandsänderung der zugehörigen Seitenteile 14 und somit als Elemente der Zwangsführung bei der Verwendung nur eines Stellmittels 10 zur Verschwenkung und nur eines Stellmittels 16 zur Änderung des Abstandes der Drehachsen 4 jeweiliger Walzen 6. Es versteht sich, dass dies wiederum nur für eine Seite der Fördervorrichtung gilt. Die andere Seite der Walzengruppe, in Förderrichtung betrachtet links oder rechts ist gemäß Fig. 6 identisch mechanisch gekoppelt.

Durch die Koppelung der Walzengruppen 2 mit den Verbindungslenkern 18 und einem jeweiligen Walzenlenker 19 zur Ausbildung eines parallelogrammartigen Viergelenks und der gleichzeitigen Kopplung der Seitenteile 14 einer jeweiligen Walzengruppe 2 in Form eines Scherenmechanismus geht bei Betätigung des Stellmittels 16 eine Abstandsänderung der Verbindungslenker 18 mit einer Abstandsänderung der Walzen 6 einer jeweiligen Walzengruppe 2 einher (vgl. Fig. 3 und 4).

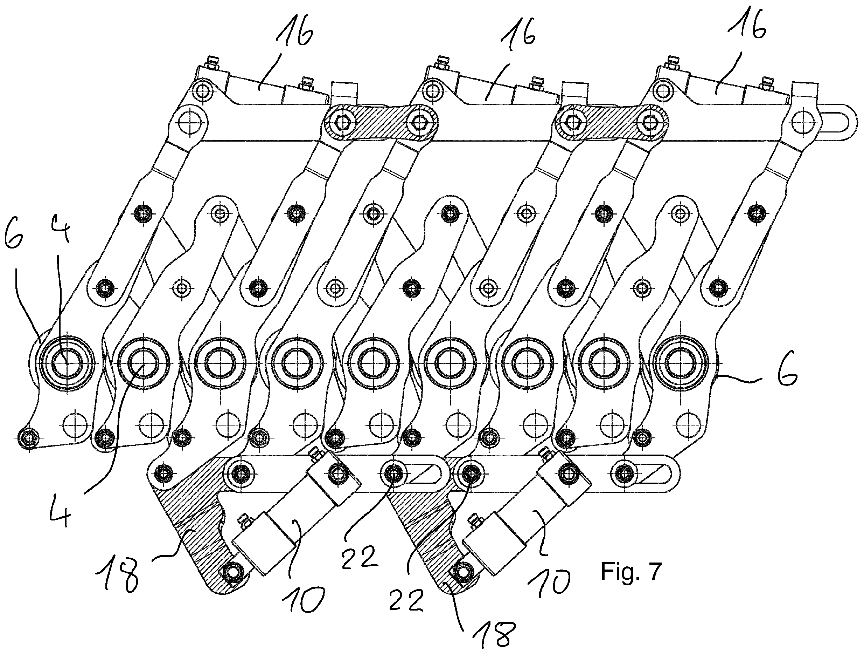

Entsprechend ist der Aufbau des in der Fig. 7 abgebildeten Ausführungsbeispiels etwas vereinfacht, da dort die Stellmittel 10 zur Verschwenkung der Walzengruppenebenen 8 zweifach auf jeder Seite angeordnet sind (unterhalb der Walzen 6), während die zur Verstellung des Abstandes der einzelnen Drehachsen 4 der Walzen 6 einer jeweiligen Walzengruppe 2 verwendeten Stellmittel 16 oberhalb angeordnet sind. Entsprechend weist eine erfindungsgemäße Hackfruchtfördervorrichtung gemäß Fig. 7 auf der linken und rechten Lagerseite betrachtet in Förderrichtung jeweils drei Stellmittel 16 und zwei Stellmittel 10 auf.

Ein landwirtschaftliches Gerät der Lagertechnik in Form eines Schüttbunkers 30 ist mit einer zur Einstellung einer Kaskadierung der Walzengruppen 2 ausgebildeten Hackfruchtfördervorrichtung versehen. Ausgehend von einem Bunker 32 werden die Hackfrüchte auf einer erfindungsgemäßen Hackfruchtfördervorrichtung gereinigt und oder bereits fraktioniert.

## Patentansprüche

1. Hackfruchtfördervorrichtung zum Reinigen und/oder Fraktionieren von Hackfrüchten, insbesondere in Form von Kartoffeln, umfassend zumindest zwei benachbarte Walzengruppen (2), die wenigstens zwei um jeweils eine Drehachse (4) rotierende Walzen (6) aufweisen, deren Drehachsen (4) eine Walzengruppenebene (8) aufspannen, und umfassend eine mit wenigstens einem Stellmittel (10) versehene Stelleinrichtung, wobei zumindest die Walzen (6) zumindest einer Walzengruppe (8) einseitig in zumindest einem mit dem Stellmittel (10) in Wirkverbindung stehenden Seitenteil (12, 14) dergestalt gelagert sind, dass durch Betätigung des Stellmittels (10) die zumindest eine Walzengruppenebene (8) relativ zu einem Rahmen, in dem die Hackfruchtfördervorrichtung anzuordnen ist, bewegbar ist, wobei die Stellvorrichtung zur Verschwenkung der Walzengruppenebene (8) insbesondere gegenüber einer Drehachse (4) einer Walze (6) einer benachbarten Walzengruppe (2) ausgebildet ist, **dadurch gekennzeichnet, dass** die Walzen (6) einer Walzengruppe (2) über einen Scherenmechanismus miteinander verbunden sind.

2. Hackfruchtfördervorrichtung nach Anspruch 1, **dadurch gekennzeichnet, dass** das Stellmittel (10) zur Verschwenkung zumindest einer der Walzengruppenebenen (8) ausgebildet ist.

3. Hackfruchtfördervorrichtung nach Anspruch 2, **dadurch gekennzeichnet, dass** die Stelleinrichtung zumindest zwei für eine Seite der Hackfruchtfördervorrichtung vorgesehene Stellmittel (10, 16) aufweist, wobei das zur Verschwenkung vorgesehene Stellmittel (10) unabhängig von dem weiteren Stellmittel (16) betätigbar ist.

4. Hackfruchtfördervorrichtung nach Anspruch 3, **dadurch gekennzeichnet, dass** das erste und das zweite, weitere Stellmittel (10, 16) an einem gemeinsamen, zwei Walzengruppen (2) verbindenden Lenker (18) angelenkt sind, insbesondere wobei die Stellmittel (10,16) nicht zur Festlegung am Rahmen ausgebildet sind.

5. Hackfruchtfördervorrichtung nach Anspruch 3 oder 4, **gekennzeichnet durch** ein weiteres, drittes Stellmittel, durch welches eine Neigung der gesamten Hackfruchtfördervorrichtung einstellbar ist.

6. Hackfruchtfördervorrichtung nach einem der vorherigen Ansprüche, **dadurch gekennzeichnet, dass** zwei benachbarte Walzengruppen (2) mittels eines zumindest als Viergelenk ausgebildeten Gelenks (20) miteinander gekoppelt sind und mittels des zur Verschwenkung vorgesehenen Stellmittels (10) zumindest einer der Lagerpunkte (22) einer Walzengruppe (2) gegenüber einem in einer Seitenansicht benachbarten Lagerpunkt (22) höherverstellbar ist, insbesondere wobei das zur Verschwenkung vorgesehene Stellmittel (10) an einem zwei Walzengruppen (2) verbindenden Verbindungslenker (18) angreift.

7. Hackfruchtfördervorrichtung nach Anspruch 6, **dadurch gekennzeichnet, dass** zwei benachbarte Walzengruppen (2) parallelogrammartig miteinander verbunden sind.

8. Hackfruchfördervorrichtung nach einem der vorherigen Ansprüche, **dadurch gekennzeichnet, dass** die Seitenteile (14) des Scherenmechanismus auf beiden Seiten der Walzen (6) in jeweils zwei Koppelstangen mit jeweiligen Langlöchern gelagert sind.

9. Hackfruchtfördervorrichtung nach einem der vorherigen Ansprüche, **dadurch gekennzeichnet, dass** alle Walzen (6) einer Walzengruppe einseitig in nur einem Seitenteil (12) gelagert sind.

10. Hackfruchtfördervorrichtung nach einem der vorherigen Ansprüche **gekennzeichnet durch** eine Exzenteraufhängung zumindest einer Walzengruppe (2), wobei das Stellmittel in Antriebsverbindung insbesondere mit einer Scheibe (28) der Exzenteraufhängung steht.

11. Landwirtschaftliches Gerät der Lagertechnik, insbesondere Schüttbunker (30), **gekennzeichnet durch** eine Hackfruchtfördervorrichtung nach einem der vorherigen Ansprüche.

## Claims

1. Root-crop conveyor for cleaning and/or separating root crops, in particular in the form of potatoes, comprising at least two adjacent roller groups (2), which have at least two rollers (6), which each rotate about an axis of rotation (4) and of which the axes of rotation (4) form a roller-group plane (8), and comprising an adjusting device, which is provided with at least one adjusting means (10), wherein at least the rollers (6) of at least one roller group (8) are mounted, on one side, in at least one side part (12, 14), which interacts with the adjusting means (10), such that actuation of the adjusting means (10) can give rise to movement of the at least one roller-group plane (8) relative to a frame in which the root-crop conveyor can be arranged, wherein the adjusting device is designed in order to pivot the roller-group plane (8) in particular in relation to an axis of rotation (4) of a roller (6) of an adjacent roller group (2), **characterized in that** the rollers (6) of a roller group (2) are connected to one another via a scissors mechanism.

2. Root-crop conveyor according to Claim 1, **characterized in that** the adjusting means (10) is designed in order to pivot at least one of the roller-group planes (8).

3. Root-crop conveyor according to Claim 2, **characterized in that** the adjusting device has at least two adjusting means (10, 16), which are provided for one side of the root-crop conveyor, wherein the adjusting means (10), which is provided for pivoting purposes, can be actuated independently of the further adjusting means (16) .

4. Root-crop conveyor according to Claim 3, **characterized in that** the first and the second, further adjusting means (10, 16) are articulated on a common link (18), which connects two roller groups (2), in particular wherein the adjusting means (10, 16) are not designed to be secured on the frame.

5. Root-crop conveyor according to Claim 3 or 4, **characterized by** a further, third adjusting means, which can adjust an inclination of the root-crop conveyor as a whole.

6. Root-crop conveyor according to one of the preceding claims, **characterized in that** two adjacent roller groups (2) are coupled to one another by means of a joint (20), designed in the form of at least a four-bar linkage, and by way of the adjusting means (10), which is provided for pivoting purposes, at least one of the bearing points (22) of a roller group (2) can be height-adjusted in relation to an adjacent bearing point (22), as seen in a side view, in particular wherein the adjusting means (10), which is provided for pivoting purposes, acts on a connecting link (18), which connects two roller groups (2) .

7. Root-crop conveyor according to Claim 6, **characterized in that** two adjacent roller groups (2) are connected to one another in the manner of a parallelogram.

8. Root-crop conveyor according to one of the preceding claims, **characterized in that** the side parts (14) of the scissors mechanism are mounted, on both sides of the rollers (6), in respectively two coupling rods each with slots.

9. Root-crop conveyor according to one of the preceding claims, **characterized in that** all the rollers (6) of a roller group are mounted, on one side, in just one side part (12).

10. Root-crop conveyor according to one of the preceding claims, **characterized by** an eccentric-suspension arrangement at least for one roller group (2), wherein the adjusting means is in drive connection in particular with a disk (28) of the eccentric-suspension arrangement.

11. Piece of agricultural equipment used for storage purposes, in particular a receiving hopper (30), **characterized by** a root-crop conveyor according to one of the preceding claims.

## Revendications

1. Dispositif de transport de plantes sarclées servant au nettoyage et/ou au fractionnement de plantes sarclées, en particulier sous forme de pommes de terre, comprenant au moins deux groupes de rouleaux (2) adjacents, qui présentent au moins deux rouleaux (6) tournant autour d'un axe de rotation (4) respectivement, rouleaux dont les axes de rotation (4) définissent un plan de groupes de rouleaux (8), et comprenant un dispositif de réglage pourvu d'au moins un moyen de réglage (10), au moins les rouleaux (6) d'au moins un groupe de rouleaux (8) étant montés, d'un côté, dans au moins une partie latérale (12, 14) en liaison fonctionnelle avec le moyen de réglage (10), de telle sorte que, par actionnement du moyen de réglage (10), l'au moins un plan de groupes de rouleaux (8) soit déplaçable par rapport à un cadre dans lequel le dispositif de transport de plantes sarclées doit être disposé, le dispositif de réglage étant réalisé pour le pivotement du plan de groupes de rouleaux (8) en particulier par rapport à un axe de rotation (4) d'un rouleau (6) d'un groupe de rouleaux (2) adjacent, **caractérisé en ce que** les rouleaux (6) d'un groupe de rouleaux (2) sont reliés les uns aux autres par le biais d'un mécanisme à leviers croisés.

2. Dispositif de transport de plantes sarclées selon la revendication 1, **caractérisé en ce que** le moyen de réglage (10) est réalisé pour le pivotement d'au moins l'un des plans de groupes de rouleaux (8).

3. Dispositif de transport de plantes sarclées selon la revendication 2, **caractérisé en ce que** le dispositif de réglage présente au moins deux moyens de réglage (10, 16) prévus pour un côté du dispositif de transport de plantes sarclées, le moyen de réglage (10) prévu pour le pivotement pouvant être actionné indépendamment de l'autre moyen de réglage (16).

4. Dispositif de transport de plantes sarclées selon la revendication 3, **caractérisé en ce que** le premier et le deuxième autre moyen de réglage (10, 16) sont articulés sur un bras (18) commun reliant deux groupes de rouleaux (2), en particulier les moyens de réglage (10, 16) n'étant pas réalisés pour la fixation au cadre.

5. Dispositif de transport de plantes sarclées selon la revendication 3 ou 4, **caractérisé par** un troisième autre moyen de réglage, par l'intermédiaire duquel une inclinaison de tout le dispositif de transport de plantes sarclées peut être réglée.

6. Dispositif de transport de plantes sarclées selon l'une des revendications précédentes, **caractérisé en ce que** deux groupes de rouleaux (2) adjacents sont accouplés l'un à l'autre au moyen d'une articulation (20) réalisée au moins sous forme de quadrilatère articulé et, à l'aide du moyen de réglage (10) prévu pour le pivotement, au moins l'un des points d'appui (22) d'un groupe de rouleaux (2) est réglable en hauteur par rapport à un point d'appui (22) adjacent dans une vue latérale, en particulier le moyen de réglage (10) prévu pour le pivotement agissant sur un bras de liaison (18) reliant deux groupes de rouleaux (2).

7. Dispositif de transport de plantes sarclées selon la revendication 6, **caractérisé en ce que** deux groupes de rouleaux (2) adjacents sont reliés l'un à l'autre à la manière d'un parallélogramme.

8. Dispositif de transport de plantes sarclées selon l'une des revendications précédentes, **caractérisé en ce que** les parties latérales (14) du mécanisme à leviers croisés sont montées, des deux côtés des rouleaux (6), dans respectivement deux tiges d'accouplement comportant des trous oblongs respectifs.

9. Dispositif de transport de plantes sarclées selon l'une des revendications précédentes, **caractérisé en ce que** tous les rouleaux (6) d'un groupe de rouleaux sont montés d'un côté dans seulement une partie latérale (12).

10. Dispositif de transport de plantes sarclées selon l'une des revendications précédentes, **caractérisé par** une suspension excentrique d'au moins un groupe de rouleaux (2), le moyen de réglage étant en liaison d'entraînement en particulier avec un disque (28) de la suspension excentrique.

11. Outil agricole de la technique de stockage, en particulier trémie de réception (30), **caractérisé par** un dispositif de transport de plantes sarclées selon l'une des revendications précédentes.
